# EUROPÄISCHE PATENTANMELDUNG

(11) **EP 3 923 097 A1**
(43) Veröffentlichungstag der Anmeldung: **15.12.2021**
(21) Anmeldenummer: 20179363.5
(22) Anmeldetag: 10.06.2020
(51) Int. Cl.: G05B 19/418, G06Q 10/08, G06Q 50/04

(54) **VERFAHREN UND SYSTEM ZUM AUTOMATISIERTEN ASSISTIEREN BEI EINEM ERFASSEN EINER REPARATUR EINES MOTORANGETRIEBENEN WERKZEUGS**

(71) Anmelder: Andreas Stihl AG & Co. KG, 71336 Waiblingen (DE)
(72) Erfinder: Böker, Robert, 71336 Waiblingen (DE); Orendi, Vanessa, 73760 Ostfildern (DE); Deziderio, Sonje, 70597 Stuttgart (DE); Blersch, Jonas, 70599 Stuttgart (DE)
(74) Vertreter: Patentanwälte Ruff, Wilhelm, Beier, Dauster & Partner mbB

(57) **Zusammenfassung**

Die Erfindung bezieht sich auf ein Verfahren zum automatisierten Assistieren bei einem Erfassen einer Reparatur eines motorangetriebenen Werkzeugs (2), wobei das Verfahren die Schritte aufweist:
a) Ermitteln mindestens eines Bauteils (eET) des Werkzeugs (2) und/oder mindestens einer Baugruppe (eEG) des Werkzeugs (2) und/oder mindestens eines Bauteil- und/oder Baugruppen-Typs (eTG) mindestens eines Bauteils (eET) und/oder mindestens einer Baugruppe (eEG), wobei das Bauteil (eET) und/oder die Baugruppe (eEG) bei der Reparatur des Werkzeugs (2) behandelt worden sind/ist,
b) Bestimmen einer Anzahl von möglichen Handlungen (mRH) ausgeführt bei der Reparatur des Werkzeugs (2) basierend auf dem ermittelten Bauteil (eET) und/oder der ermittelten Baugruppe (eEG) und/oder dem ermittelten Bauteil- und/oder Baugruppen-Typ (eTG), und
c) Ausgeben der bestimmten Anzahl von möglichen Handlungen (mRH).

## Beschreibung

### ANWENDUNGSGEBIET UND STAND DER TECHNIK

Die Erfindung bezieht sich auf ein Verfahren zum automatisierten Assistieren bei einem Erfassen einer Reparatur eines motorangetriebenen Werkzeugs und ein System zum automatisierten Assistieren bei einem Erfassen einer Reparatur eines motorangetriebenen Werkzeugs.

### AUFGABE UND LÖSUNG

Der Erfindung liegt als Aufgabe die Bereitstellung eines Verfahrens zum automatisierten Assistieren bei einem Erfassen einer Reparatur eines motorangetriebenen Werkzeugs und eines Systems zum automatisierten Assistieren bei einem Erfassen einer Reparatur eines motorangetriebenen Werkzeugs zugrunde, das jeweils verbesserte Eigenschaften aufweist.

Die Erfindung löst diese Aufgabe durch die Bereitstellung eines Verfahrens mit den Merkmalen des Anspruchs 1 und/oder eines Systems mit den Merkmalen des Anspruchs 13. Vorteilhafte Weiterbildungen und/oder Ausgestaltungen der Erfindung sind in den abhängigen Ansprüchen beschrieben.

Das erfindungsgemäße Verfahren ist zum automatisierten Assistieren bzw. Unterstützen bei einem Erfassen einer Reparatur bzw. einer Instandsetzung eines motorangetriebenen Werkzeugs ausgebildet bzw. konfiguriert. Das Verfahren umfasst bzw. weist die Schritte auf: a) Ermitteln, insbesondere automatisiertes Ermitteln, insbesondere Erfassen und/oder Empfangen, mindestens eines Bauteils, insbesondere einer Information über das Bauteil, des Werkzeugs und/oder mindestens einer Baugruppe, insbesondere einer Information über die Baugruppe, des Werkzeugs und/oder mindestens eines Bauteil- und/oder Baugruppen-Typs, insbesondere einer Information über den Bauteil- und/oder Baugruppen-Typ, mindestens eines, insbesondere des mindestens einen, Bauteils und/oder mindestens einer, insbesondere der mindestens einen, Baugruppe, wobei das Bauteil und/oder die Baugruppe bei, insbesondere zu, der Reparatur des Werkzeugs, insbesondere durch einen Reparateur des Werkzeugs, insbesondere unmittelbar, behandelt worden sind/ist. b) Bestimmen, insbesondere automatisiertes Bestimmen, einer Anzahl, insbesondere einer Mehrzahl, von möglichen Handlungen, insbesondere einer Information über die Anzahl von möglichen Handlungen, insbesondere durch den Reparateur, ausgeführt bei, insbesondere zu, der Reparatur des Werkzeugs basierend auf dem ermittelten Bauteil, insbesondere der ermittelten Information über das Bauteil, und/oder der ermittelten Baugruppe, insbesondere der ermittelten Information über die Baugruppe, und/oder dem ermittelten Bauteil- und/oder Baugruppen-Typ, insbesondere der ermittelten Information über den Bauteil- und/oder Baugruppen-Typ. c) Ausgeben, insbesondere automatisiertes Ausgeben, der bestimmten Anzahl von möglichen Handlungen, insbesondere der ermittelten Information über die Anzahl von möglichen Handlungen, insbesondere an den Reparateur.

Dies, insbesondere das Ermitteln des Bauteils und/oder der Baugruppe und/oder des Bauteil- und/oder Baugruppen-Typs, ermöglicht das Bestimmen der Anzahl von möglichen Handlungen, insbesondere mittelbar. Zusätzlich oder alternativ ermöglicht dies, insbesondere das Ausgeben der bestimmen Anzahl von möglichen Handlungen, dass die Reparatur schnell und somit kostengünstig erfasst werden kann, insbesondere durch den Reparateur. Insbesondere mag dieses Assistieren bei dem Erfassen der Reparatur umständlich erscheinen, insbesondere das Ermitteln des Bauteils und/oder der Baugruppe und/oder des Bauteil- und/oder Baugruppen-Typs und das Bestimmen der Anzahl von möglichen Handlungen basierend darauf wie ein Umweg, insbesondere im Unterschied zu einem unmittelbaren Ermitteln, insbesondere Erfassen, von, insbesondere tatsächlichen, Handlungen ausgeführt bei der Reparatur des Werkzeugs. Aber überraschenderweise kann dies eine Ab- bzw. Verkürzung des Erfassens der Reparatur ermöglichen.

Insbesondere kann das Werkzeug ein handgeführtes (Englisch: hand-held), insbesondere handgetragenes (Englisch: hand-portable), und/oder bodengeführtes Werkzeug sein. Insbesondere kann handgeführtes, insbesondere handgetragenes, Werkzeug bedeuten, dass das Werkzeug eine Masse von maximal 50 Kilogramm (kg), insbesondere von maximal 20 kg, insbesondere von maximal 10 kg, insbesondere von maximal 5 kg, und/oder von minimal 1 kg, insbesondere von minimal 2 kg, aufweisen kann. Zusätzlich oder alternativ kann das Werkzeug ein Garten-, Forst- und/oder Bauwerkzeug sein.

Das Bauteil kann ein Ersatzteil sein und/oder die Baugruppe kann eine Ersatzgruppe sein, wobei das Ersatzteil und/oder die Ersatzgruppe bei der Reparatur des Werkzeugs bei diesem getauscht, insbesondere ein- oder ausgetauscht, bzw. ersetzt bzw. verbaut, insbesondere ein- oder ausgebaut, worden sind/ist. Zusätzlich oder alternativ kann der Bauteil- und/oder Baugruppen-Typ ein Ersatzteil- und/oder Ersatzgruppen-Typ mindestens eines, insbesondere des mindestens einen, Ersatzteils und/oder mindestens einer, insbesondere der mindestens einen, Ersatzgruppe sein.

Behandelt kann gereinigt und/oder geprüft bedeuten.

Die Anzahl von möglichen Handlungen kann eine Anzahl von möglichen Reinigungs-, Prüfungs-, Tausch- und/oder Reparaturhandlungen aufweisen, insbesondere sein. Zusätzlich oder alternativ kann die Anzahl von möglichen Handlungen eine Anzahl von möglichen Handlungen ausgeführt an dem Bauteil und/oder der Baugruppe und/oder einem und/oder einer anderen, mit dem Bauteil und/oder der Baugruppe funktional zusammenhängenden bzw. zusammenwirkenden, insbesondere diesem und/oder dieser vorhergehenden, Bauteil, insbesondere derselben Baugruppe, und/oder Baugruppe aufweisen, insbesondere sein. Weiter zusätzlich oder alternativ kann im Fall des Ersatzteils und/oder der Ersatzgruppe die Anzahl von möglichen Handlungen eine Anzahl von möglichen Handlungen, insbesondere Reinigungs-, Prüfungs-, und/oder Reparaturhandlungen, des, insbesondere getauschten bzw. ersetzten, Bauteils und/oder der, insbesondere getauschten bzw. ersetzten, Baugruppe aufweisen, insbesondere sein.

Basierend auf dem ermittelten Bauteil und/oder der ermittelten Baugruppe und/oder dem ermittelten Bauteil- und/oder Baugruppen-Typ kann die Anzahl von möglichen Handlungen und basierend auf einem anderen ermittelten Bauteil und/oder einer anderen ermittelten Baugruppe und/oder einem anderen ermittelten Bauteil- und/oder Baugruppen-Typ kann eine andere Anzahl von möglichen Handlungen bestimmt werden.

Das Ausgeben kann ein akustisches und/oder optisches Ausgeben, insbesondere ein Anzeigen, aufweisen, insbesondere sein.

Der Schritt b) kann zeitlich nach dem Schritt a) ausgeführt werden. Zusätzlich oder alternativ kann der Schritt c) zeitlich nach dem Schritt b) ausgeführt werden.

In einer Weiterbildung der Erfindung ist die Anzahl von möglichen Handlungen benutzerbestätigbar, insbesondere benutzerauswählbar. Das Verfahren umfasst bzw. weist die Schritte auf: d) Bestätigen, insbesondere Auswählen bzw. Selektieren, mindestens einer, insbesondere tatsächlichen, Handlung, insbesondere einer Information über die Handlung, aus der ausgegebenen Anzahl von möglichen Handlungen, insbesondere der ausgegebenen Information über die Anzahl von möglichen Handlungen, insbesondere durch den Reparateur. e) Speichern, insbesondere automatisiertes Speichern, der bestätigten, insbesondere ausgewählten, Handlung, insbesondere der bestätigten Information über die Handlung. Das Bestimmen der Anzahl von möglichen Handlungen basierend auf dem ermittelten Bauteil und/oder der ermittelten Baugruppe und/oder dem ermittelten Bauteil- und/oder Baugruppen-Typ ermöglicht, dass die Anzahl von möglichen Handlungen klein sein kann, insbesondere kleiner als eine Mehrzahl von allen bzw. sämtlichen möglichen Handlungen ausgeführt bei einer Reparatur des Werkzeugs, insbesondere bestimmt basierend auf, insbesondere nur, einem ermittelten Werkzeug-Typ des Werkzeugs. Dies ermöglicht, dass der Reparateur, insbesondere nur, die, insbesondere kleine, Anzahl von möglichen Handlungen ausgegeben bekommt und, insbesondere nur, in, insbesondere aus, dieser bestätigen, insbesondere auszuwählen, braucht. Somit ermöglicht dies, dass die Reparatur schnell erfasst werden kann. Zusätzlich oder alternativ ermöglicht das Speichern das Erfassen der Reparatur. Insbesondere kann der Schritt d) zeitlich nach dem Schritt c) ausgeführt werden. Zusätzlich oder alternativ kann der Schritt e) zeitlich nach dem Schritt d) ausgeführt werden.

Insbesondere kann das Verfahren den Schritt umfassen bzw. aufweisen: Speichern, insbesondere automatisiertes Speichern, des ermittelten Bauteils, insbesondere der ermittelten Information über das Bauteil, und/oder der ermittelten Baugruppe, insbesondere der ermittelten Information über die Baugruppe, und/oder des ermittelten Bauteil- und/oder Baugruppen-Typs, insbesondere der ermittelten Information über den Bauteil- und/oder Baugruppen-Typ.

In einer Ausgestaltung der Erfindung umfasst bzw. weist das Verfahren den Schritt auf: f) Ausgeben, insbesondere automatisiertes Ausgeben, und/oder Übertragen, insbesondere automatisiertes Übertragen, der gespeicherten Handlung, insbesondere der gespeicherten Information über die Handlung, insbesondere und des ermittelten, insbesondere und gespeicherten, Bauteils, insbesondere der ermittelten Information über das Bauteil, und/oder der ermittelten, insbesondere und gespeicherten, Baugruppe, insbesondere der ermittelten Information über die Baugruppe, und/oder des ermittelten, insbesondere und gespeicherten, Bauteil- und/oder Baugruppen-Typs, insbesondere der ermittelten Information über den Bauteil- und/oder Baugruppen-Typ, insbesondere an den Reparateur und/oder einen Benutzer des Werkzeugs. Insbesondere kann das Ausgeben ein akustisches und/oder optisches Ausgeben, insbesondere ein Anzeigen, aufweisen, insbesondere sein. Zusätzlich oder alternativ kann das Übertragen ein kabelloses bzw. drahtloses Übertragen aufweisen, insbesondere sein. Weiter zusätzlich oder alternativ kann der Schritt f) zeitlich nach dem Schritt e) ausgeführt werden.

In einer Weiterbildung, insbesondere einer Ausgestaltung, der Erfindung umfasst bzw. weist der Schritt b) auf: Bestimmen, insbesondere automatisiertes Bestimmen, einer Anzahl, insbesondere einer Mehrzahl, von notwendigen bzw. zwangsläufigen Handlungen, insbesondere einer Information über die Anzahl von notwendigen Handlungen, insbesondere durch den Reparateur, ausgeführt bei, insbesondere zu, der Reparatur des Werkzeugs basierend auf dem ermittelten Bauteil, insbesondere der ermittelten Information über das Bauteil, und/oder der ermittelten Baugruppe, insbesondere der ermittelten Information über die Baugruppe, und/oder dem ermittelten Bauteil- und/oder Baugruppen-Typ, insbesondere der ermittelten Information über den Bauteil- und/oder Baugruppen-Typ. Der Schritt c) und/oder der Schritt f), soweit vorhanden, umfassen/umfasst bzw. weisen/weist auf: Ausgeben, insbesondere automatisiertes Ausgeben, und/oder Übertragen, insbesondere automatisiertes Übertragen, der bestimmten Anzahl von notwendigen Handlungen, insbesondere der bestimmten Information über die Anzahl von notwendigen Handlungen, insbesondere an den Reparateur und/oder den Benutzer. Dies ermöglicht ein vollständiges Erfassen der Reparatur. Insbesondere können die Anzahl von möglichen Handlungen und die Anzahl von notwendigen Handlungen verschieden, insbesondere verschiedenartig, sein. Zusätzlich oder alternativ kann im Fall des Ersatzteils und/oder der Ersatzgruppe die Anzahl von notwenigen Handlungen eine Anzahl von notwendigen Tauschhandlungen aufweisen, insbesondere sein. Weiter zusätzlich oder alternativ kann das Verfahren den Schritt umfassen bzw. aufweisen: Speichern, insbesondere automatisiertes Speichern, der bestimmten Anzahl von notwendigen Handlungen, insbesondere der bestimmten Information über die Anzahl von notwendigen Handlungen.

In einer Weiterbildung, insbesondere einer Ausgestaltung, der Erfindung umfasst bzw. weist das Verfahren den Schritt auf: Ermitteln, insbesondere automatisiertes Ermitteln, insbesondere Erfassen und/oder Empfangen, eines Werkzeug-Typs, insbesondere einer Information über den Werkzeug-Typ, des Werkzeugs. Der Schritt b) umfasst bzw. weist auf: Bestimmen, insbesondere automatisiertes Bestimmen, der Anzahl von möglichen Handlungen, insbesondere der Information über die Anzahl von möglichen Handlungen, und/oder der Anzahl von notwendigen Handlungen, insbesondere der Information über die Anzahl von möglichen Handlungen, soweit vorhanden, basierend auf dem ermittelten Werkzeug-Typ, insbesondere der ermittelten Information über den Werkzeug-Typ. Dies ermöglicht ein Bestimmen, insbesondere und ein Ausgeben, von unmöglichen Handlungen zu vermeiden. Somit ermöglicht dies, dass die Anzahl von möglichen Handlungen besonders klein sein kann. Zusätzlich oder alternativ ermöglicht dies ein besonders vollständiges Erfassen der Reparatur. Insbesondere können/kann das Bauteil und/oder die Baugruppe bei, insbesondere in, verschiedenen Werkzeug-Typen von motorangetriebenen Werkzeugen verwendet werden, wobei bei den bzw. für die verschiedenen Werkzeug-Typen, insbesondere verschiedene, Anzahlen von verschiedenen, insbesondere verschiedenartigen, Handlungen möglich und/oder notwendig sein können. Zusätzlich oder alternativ kann der Werkzeug-Typ aus einer Menge von verschiedenen Werkzeug-Typen von motorangetriebenen Werkzeugen sein. Weiter zusätzlich oder alternativ kann das Ermitteln des Werkzeug-Typs des Werkzeugs umfassen bzw. aufweisen: Auswählen, insbesondere automatisiertes Auswählen, bzw. Selektieren, insbesondere nur, des, insbesondere einzigen, Werkzeug-Typs des Werkzeugs aus einer Menge von verschiedenen Werkzeug-Typen von motorangetriebenen Werkzeugen, insbesondere durch den Reparateur.

In einer Weiterbildung der Erfindung umfasst bzw. weist das Verfahren den Schritt auf: Ermitteln, insbesondere automatisiertes Ermitteln, insbesondere Erfassen und/oder Empfangen, eines, insbesondere des, Werkzeug-Typs, insbesondere einer Information über den Werkzeug-Typ, des Werkzeugs. Das Verfahren umfasst bzw. weist den Schritt auf: Bestimmen, insbesondere automatisiertes Bestimmen, einer benutzerauswählbaren Mehrzahl von möglichen Bauteil- und/oder Baugruppen-Typen, insbesondere einer benutzerauswählbaren Information über die Mehrzahl von möglichen Bauteil- und/oder Baugruppen-Typen, von möglichen Bauteilen und/oder von möglichen Baugruppen, insbesondere durch den Reparateur, insbesondere unmittelbar, behandelt bei, insbesondere zu, der Reparatur des Werkzeugs basierend auf dem ermittelten Werkzeug-Typ, insbesondere der ermittelten Information über den Werkzeug-Typ. Das Verfahren umfasst bzw. weist den Schritt auf: Ausgeben, insbesondere automatisiertes Ausgeben, der bestimmten Mehrzahl von möglichen Bauteil- und/oder Baugruppen-Typen, insbesondere der bestimmten Information über die Mehrzahl von möglichen Bauteil- und/oder Baugruppen-Typen. Der Schritt a) umfasst bzw. weist auf: Auswählen bzw. Selektieren des Bauteil- und/oder Baugruppen-Typs, insbesondere der Information über den Bauteil- und/oder Baugruppen-Typ, aus der ausgegebenen Mehrzahl von möglichen Bauteil- und/oder Baugruppen-Typen, insbesondere der ausgegeben Information über die Mehrzahl von möglichen Bauteil- und/oder Baugruppen-Typen, insbesondere durch den Reparateur. Dies ermöglicht ein Bestimmen, insbesondere und ein Ausgeben, von unmöglichen Bauteil- und/oder Baugruppen-Typen zu vermeiden. Somit ermöglicht dies, dass die Mehrzahl von möglichen Bauteil- und/oder Baugruppen-Typen klein sein kann. Somit ermöglicht dies, dass die Reparatur schnell erfasst werden kann. Insbesondere können verschiedenen Werkzeug-Typen von motorangetriebenen Werkzeugen verschiedene, insbesondere verschiedenartige, Bauteil- und/oder Baugruppen-Typen von Bauteilen und/oder Baugruppen aufweisen. Zusätzlich oder alternativ kann der Werkzeug-Typ aus einer Menge von verschiedenen Werkzeug-Typen von motorangetriebenen Werkzeugen sein. Weiter zusätzlich oder alternativ kann das Ermitteln des Werkzeug-Typs des Werkzeugs umfassen bzw. aufweisen: Auswählen, insbesondere automatisiertes Auswählen, bzw. Selektieren, insbesondere nur, des, insbesondere einzigen, Werkzeug-Typs des Werkzeugs aus einer Menge von verschiedenen Werkzeug-Typen von motorangetriebenen Werkzeugen, insbesondere durch den Reparateur.

In einer Weiterbildung, insbesondere einer Ausgestaltung, der Erfindung umfasst bzw. weist der Schritt b) auf: Selektieren, insbesondere automatisiertes Selektieren, bzw. Auswählen der Anzahl von möglichen Handlungen, insbesondere der Information über die Anzahl von möglichen Handlungen, und/oder der Anzahl von notwendigen Handlungen, insbesondere der Information über die Anzahl von notwendigen Handlungen, soweit vorhanden, aus einer Menge von verschiedenen Handlungen, insbesondere verschiedenen Informationen über die Handlungen, wobei den Handlungen, insbesondere den Informationen über die Handlungen, jeweils mindestens ein Bauteil, insbesondere eine Informationen über das Bauteil, aus einer Menge von verschiedenen Bauteilen, insbesondere verschiedenen Informationen über die Bauteile, und/oder mindestens eine Baugruppe, insbesondere eine Information über die Baugruppe, aus einer Menge von verschiedenen Baugruppen, insbesondere verschiedenen Informationen über die Baugruppen, und/oder mindestens ein Bauteil- und/oder Baugruppen-Typ, insbesondere eine Information über den Bauteil- und/oder Baugruppen-Typ, eines Bauteils und/oder einer Baugruppe aus einer Menge von verschiedenen Bauteil- und/oder Baugruppen-Typen, insbesondere verschiedene Informationen über die Bauteil- und/oder Baugruppen-Typen, von Bauteilen und/oder Baugruppen, insbesondere und mindestens ein Werkzeug-Typ, insbesondere eine Information über den Werkzeug-Typ, eines motorangetriebenen Werkzeugs aus einer Menge von verschiedenen Werkzeug-Typen, insbesondere verschiedenen Informationen über die Werkzeug-Typen, von motorangetriebenen Werkzeugen, soweit vorhanden, zugeordnet sind. Zusätzlich oder alternativ umfasst bzw. weist das Bestimmen der Mehrzahl von möglichen Bauteil- und/oder Baugruppen-Typen, soweit vorhanden, auf: Selektieren, insbesondere automatisiertes Selektieren, bzw. Auswählen der Mehrzahl von möglichen Bauteil- und/oder Baugruppen-Typen, insbesondere der Information über die Mehrzahl von möglichen Bauteil- und/oder Baugruppen-Typen, aus einer Menge von verschiedenen Bauteil- und/oder Baugruppen-Typen, insbesondere verschiedenen Informationen über die Bauteil- und/oder Baugruppen-Typen, von Bauteilen und/oder Baugruppen, wobei den Bauteil- und/oder Baugruppen-Typen, insbesondere den Informationen über die Bauteil- und/oder Baugruppen-Typen, jeweils mindestens ein Werkzeug-Typ, insbesondere eine Information über den Werkzeug-Typ, eines motorangetriebenen Werkzeugs aus einer Menge von verschiedenen Werkzeug-Typen, insbesondere verschiedenen Informationen über die Werkzeug-Typen, von motorangetriebenen Werkzeugen zugeordnet sind. Dies ermöglicht das Bestimmen der Anzahl von möglichen Handlungen und/oder der Anzahl von notwendigen Handlungen und/oder der Mehrzahl von möglichen Bauteil- und/oder Baugruppen-Typen basierend auf dem ermittelten Bauteil und/oder der ermittelten Baugruppe und/oder dem ermittelten Bauteil- und/oder Baugruppen-Typ und/oder dem ermittelten Werkzeug-Typ.

In einer Weiterbildung, insbesondere einer Ausgestaltung, der Erfindung umfassen/umfasst bzw. weisen/weist der Schritt a) und/oder der Schritt d), soweit vorhanden, und/oder das Ermitteln des Werkzeug-Typs, soweit vorhanden, ein berührungsbehaftetes bzw. berührungssensitives bzw. haptisches und/oder akustisches Eingeben auf, insbesondere durch den Reparateur. Dies ermöglicht eine hohe Reparateur-Freundlichkeit. Insbesondere kann das berührungsbehaftete Eingeben mittels einer Maus und/oder eines Touch-Displays erfolgen. Zusätzlich oder alternativ kann das akustische Eingeben mittels einer Spracheingabe, insbesondere Erfassens der Spracheingabe, und/oder eines Mikrophons erfolgen.

In einer Weiterbildung, insbesondere einer Ausgestaltung, der Erfindung umfasst bzw. weist der Schritt a) auf: Ermitteln, insbesondere automatisiertes Ermitteln, insbesondere Erfassen und/oder Empfangen, eines Bauteil- und/oder Baugruppen-Identifikators, insbesondere eines Werts des Bauteil- und/oder Baugruppen-Identifikators, insbesondere einer Bauteil- und/oder Baugruppen-Seriennummer, insbesondere eines Werts der Bauteil- und/oder Baugruppen-Seriennummer, und/oder einer Bauteil- und/oder Baugruppen-Typnummer, insbesondere eines Werts der Bauteil- und/oder Baugruppen-Typnummer, zum Identifizieren des Bauteils und/oder der Baugruppe und/oder des Bauteil- und/oder Baugruppen-Typs. Der Schritt b) umfasst bzw. weist auf: Bestimmen, insbesondere automatisiertes Bestimmen, der Anzahl von möglichen Handlungen, insbesondere der Information über die Anzahl von möglichen Handlungen, und/oder der Anzahl von notwendigen Handlungen, insbesondere der Information über die Anzahl von notwendigen Handlungen, soweit vorhanden, basierend auf dem ermittelten Bauteil- und/oder Baugruppen-Identifikator, insbesondere dem ermittelten Wert des Bauteil- und/oder Baugruppen-Identifikators, insbesondere der ermittelten Bauteil- und/oder Baugruppen-Seriennummer, insbesondere dem ermittelten Wert der Bauteil- und/oder Baugruppen-Seriennummer, und/oder der ermittelten Bauteil- und/oder Baugruppen-Typnummer, insbesondere dem ermittelten Wert der Bauteil- und/oder Baugruppen-Typnummer. Zusätzlich oder alternativ umfasst bzw. weist das Ermitteln des Werkzeug-Typs, soweit vorhanden, auf: Ermitteln, insbesondere automatisiertes Ermitteln, insbesondere Erfassen und/oder Empfangen, eines Werkzeug-Identifikators, insbesondere eines Werts des Werkzeug-Identifikators, insbesondere einer Werkzeug-Seriennummer, insbesondere eines Werts der Werkzeug-Seriennummer, und/oder einer Werkzeug-Typnummer, insbesondere eines Werts der Werkzeug-Typnummer, zum Identifizieren des Werkzeugs und/oder des Werkzeug-Typs. Der Schritt b) umfasst bzw. weist auf: Bestimmen, insbesondere automatisiertes Bestimmen, der Anzahl von möglichen Handlungen, insbesondere der Information über die Anzahl von möglichen Handlungen, und/oder der Anzahl von notwendigen Handlungen, insbesondere der Information über die Anzahl von notwendigen Handlungen, soweit vorhanden, basierend auf dem ermittelten Werkzeug-Identifikator, insbesondere dem ermittelten Wert des Werkzeug-Identifikators, insbesondere der ermittelten Werkzeug-Seriennummer, insbesondere dem ermittelten Wert der Werkzeug-Seriennummer, und/oder der ermittelten Werkzeug-Typnummer, insbesondere dem ermittelten Wert der Werkzeug-Typnummer. Zusätzlich oder alternativ umfasst bzw. weist das Bestimmen der Mehrzahl von möglichen Bauteil- und/oder Baugruppen-Typen, soweit vorhanden, auf: Bestimmen, insbesondere automatisiertes Bestimmen, der Mehrzahl von möglichen Bauteil- und/oder Baugruppen-Typen, insbesondere der Information über die Mehrzahl von möglichen Bauteil- und/oder Baugruppen-Typen, basierend auf dem ermittelten Werkzeug-Identifikator, insbesondere dem ermittelten Wert des Werkzeug-Identifikators, insbesondere der ermittelten Werkzeug-Seriennummer, insbesondere dem ermittelten Wert der Werkzeug-Seriennummer, und/oder der ermittelten Werkzeug-Typnummer, insbesondere dem ermittelten Wert der Werkzeug-Typnummer.

In einer Weiterbildung, insbesondere einer Ausgestaltung, der Erfindung umfasst bzw. weist der Schritt a) ein optisches Erfassen, insbesondere ein automatisiertes optisches Erfassen, mindestens eines Bauteil- und/oder Baugruppen-Stücks des Bauteils und/oder der Baugruppe und/oder des Bauteil- und/oder Baugruppen-Identifikators, insbesondere des Werts des Bauteil- und/oder Baugruppen-Identifikators, soweit vorhanden, auf. Zusätzlich oder alternativ umfasst bzw. weist das Ermitteln des Werkzeug-Typs, soweit vorhanden, ein optisches Erfassen, insbesondere ein automatisiertes optisches Erfassen, mindestens eines Werkzeug-Stücks des Werkzeugs und/oder des Werkzeug-Identifikators, insbesondere des Werts des Werkzeug-Identifikators, soweit vorhanden, auf. Dies ermöglicht eine hohe Reparateur-Freundlichkeit. Insbesondere kann das optische Erfassen mittels Code-Lesens, insbesondere Barcode-Lesens und/oder 2D-Code-Lesens, und/oder Bilderkennung erfolgen.

In einer Weiterbildung der Erfindung umfasst bzw. weist das Werkzeug ein Motorantriebssystem auf. Das Bauteil und/oder die Baugruppe sind/ist bei, insbesondere zu, der Reparatur des Motorantriebssystems, insbesondere durch den Reparateur, insbesondere unmittelbar, behandelt worden. Die Anzahl von möglichen Handlungen ist ausgeführt bei, insbesondere zu, der Reparatur des Motorantriebssystems. Insbesondere kann das Motorantriebssystem ein Verbrennungsmotorantriebssystem und/oder ein elektrisches Motorantriebssystem, insbesondere ein Akkumulator-Motorantriebssystem, aufweisen, insbesondere sein. Zusätzlich oder alternativ kann das Werkzeug ein Bearbeitungswerkzeug aufweisen und das Motorantriebssystem kann zum Antrieb des Bearbeitungswerkzeugs ausgebildet sein.

In einer Weiterbildung der Erfindung ist das Werkzeug eine Säge, ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, insbesondere ein Roboter-Rasenmäher oder ein Aufsitz-Rasenmäher, ein Vertikutierer, eine Grasschere, ein Häcksler, ein Gesteinsschneider, ein Hochdruckreiniger oder ein Spritz- und/oder Sprühgerät.

Das erfindungsgemäße, insbesondere elektrische, System ist zum automatisierten Assistieren bei einem, insbesondere dem, Erfassen einer, insbesondere der, Reparatur eines, insbesondere des, motorangetriebenen Werkzeugs, insbesondere zum Ausführen eines, insbesondere des, Verfahrens wie vorhergehend beschrieben, ausgebildet bzw. konfiguriert. Das System umfasst bzw. weist eine, insbesondere elektrische, Ermittlungseinrichtung, eine, insbesondere elektrische, Bestimmungseinrichtung und eine, insbesondere elektrische, Ausgabeeinrichtung auf. Die Ermittlungseinrichtung ist zum, insbesondere automatisierten, Ermitteln mindestens eines, insbesondere des mindestens einen, Bauteils des Werkzeugs und/oder mindestens einer, insbesondere der mindestens einen, Baugruppe des Werkzeugs und/oder mindestens eines, insbesondere des mindestens einen, Bauteil- und/oder Baugruppen-Typs mindestens eines, insbesondere des mindestens einen, Bauteils und/oder mindestens einer, insbesondere der mindestens einen, Baugruppe, wobei das Bauteil und/oder die Baugruppe bei der Reparatur des Werkzeugs behandelt worden sind/ist, ausgebildet bzw. konfiguriert. Die Bestimmungseinrichtung ist zum, insbesondere automatisierten, Bestimmen einer, insbesondere der, Anzahl von möglichen Handlungen ausgeführt bei der Reparatur des Werkzeugs basierend auf dem ermittelten Bauteil und/oder der ermittelten Baugruppe und/oder dem ermittelten Bauteil- und/oder Baugruppen-Typ ausgebildet bzw. konfiguriert Die Ausgabeeinrichtung ist zum, insbesondere automatisierten, Ausgeben der bestimmten Anzahl von möglichen Handlungen ausgebildet bzw. konfiguriert.

Insbesondere können/kann das Werkzeug und/oder das Bauteil und/oder die Baugruppe, insbesondere jeweils, teilweise oder vollständig ausgebildet sein wie vorhergehend beschrieben.

Die Ermittlungseinrichtung, die Bestimmungseinrichtung und/oder die Ausgabeeinrichtung können/kann getrennt von dem Werkzeug ausgebildet sein. In anderen Worten: die Ermittlungseinrichtung, die Bestimmungseinrichtung und/oder die Ausgabeeinrichtung brauchen/braucht oder können/kann kein Bestandteil des Werkzeugs sein.

Das System kann ein mobiles, insbesondere portables bzw. handgetragenes, Gerät aufweisen, wobei das Gerät die Ermittlungseinrichtung, die Bestimmungseinrichtung und/oder die Ausgabeeinrichtung aufweisen kann. Insbesondere kann das mobile Gerät getrennt von dem Werkzeug ausgebildet sein. In anderen Worten: das mobile Gerät braucht oder kann kein Bestandteil des Werkzeugs sein.

In einer Weiterbildung der Erfindung umfasst bzw. weist die Ermittlungseinrichtung eine, insbesondere elektrische, Eingabeeinrichtung zu einem berührungsbehafteten und/oder akustischen Eingeben und/oder eine, insbesondere elektrische, Erfassungseinrichtung zum optischen Erfassen auf. Insbesondere kann die Eingabeeinrichtung eine, insbesondere die, Maus, ein, insbesondere das, Touch-Display und/oder ein, insbesondere das, Mikrophon aufweisen, insbesondere sein. Zusätzlich oder alternativ kann die Erfassungseinrichtung ein Lesegerät, insbesondere eine Kamera, aufweisen.

In einer Weiterbildung der Erfindung umfasst bzw. weist das System das Bauteil und/oder die Baugruppe und/oder das Werkzeug auf.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine schematische Ansicht eines erfindungsgemäßen Verfahrens aufweisend ein Ermitteln, insbesondere ein Erfassen, und eines erfindungsgemäßen Systems aufweisend eine Ermittlungseinrichtung, insbesondere eine Erfassungseinrichtung, und ein motorangetriebenes Werkzeug,
- Fig. 2: eine schematische Ansicht eines Behandelns bzw. einer Handlung, insbesondere eines Tauschens, und des Systems der Fig. 1 aufweisend ein Bauteil,
- Fig. 3: eine weitere schematische Ansicht des Verfahrens der Fig. 1 aufweisend ein Ermitteln, insbesondere ein Erfassen, und des Systems der Fig. 1 aufweisend die Ermittlungseinrichtung, insbesondere die Erfassungseinrichtung,
- Fig. 4: eine weitere schematische Ansicht des Verfahrens der Fig. 1 aufweisend das Ermitteln, insbesondere ein Auswählen und ein Eingeben, ein Ausgeben und ein Bestätigen und des Systems der Fig. 1 aufweisend die Ermittlungseinrichtung, insbesondere eine Eingabeeinrichtung, und eine Ausgabeeinrichtung,
- Fig. 5: eine weitere schematische Ansicht des Verfahrens der Fig. 1 aufweisend ein Bestimmen, insbesondere ein Selektieren, ein Speichern und ein Ausgeben und/oder einer Übertragen und des Systems der Fig. 1 aufweisend eine Bestimmungseinrichtung,
- Fig. 6: eine weitere schematische Ansicht des Verfahrens der Fig. 1 aufweisend das Ausgeben und das Bestätigen, insbesondere ein Eingeben, und des Systems der Fig. 1 aufweisend die Ermittlungseinrichtung, insbesondere die Eingabeeinrichtung, und die Ausgabeeinrichtung,
- Fig. 7: eine weitere schematische Ansicht des Verfahrens der Fig. 1 aufweisend das Ermitteln, insbesondere das Eingeben, das Ausgeben und das Bestätigen, insbesondere das Eingeben, und des Systems der Fig. 1 aufweisend die Ermittlungseinrichtung, insbesondere die Eingabeeinrichtung, und die Ausgabeeinrichtung,
- Fig. 8: eine weitere schematische Ansicht des Verfahrens der Fig. 1 aufweisend das Ermitteln, insbesondere das Erfassen, und des Systems der Fig. 1 aufweisend die Ermittlungseinrichtung, insbesondere die Eingabeeinrichtung, und die Ausgabeeinrichtung, und
- Fig. 9: eine weitere schematische Ansicht des Verfahrens der Fig. 1 aufweisend ein Ausgeben und des Systems der Fig. 1 aufweisend die Ermittlungseinrichtung, insbesondere die Eingabeeinrichtung, und die Ausgabeeinrichtung.

### DETAILLIERTE BESCHREIBUNG DER AUSFÜHRUNGSBEISPIELE

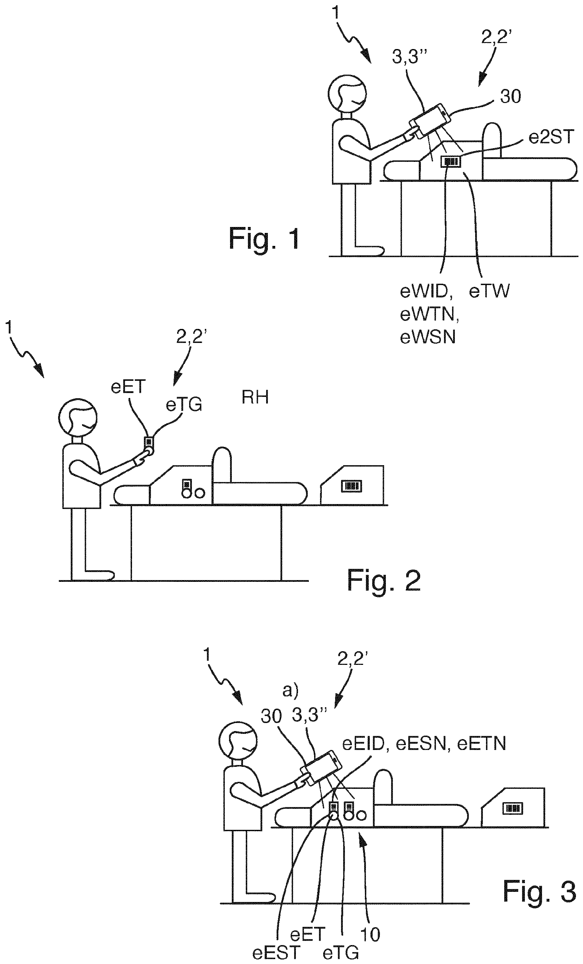

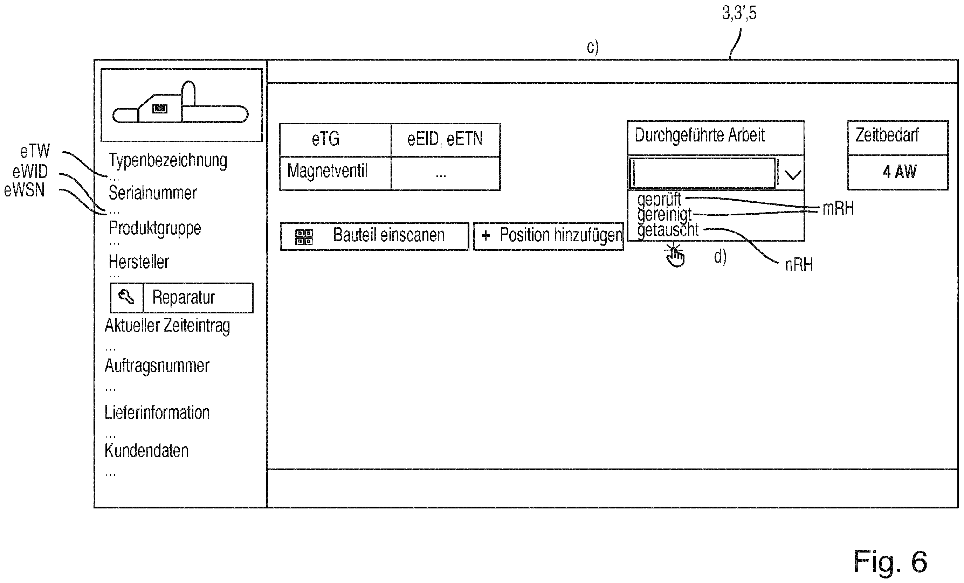

Fig. 1 bis 5 zeigen ein erfindungsgemäßes System 1 und Fig. 1 und 3 bis 9 zeigen ein erfindungsgemäßes Verfahren zum automatisierten Assistieren bei einem Erfassen einer Reparatur eines motorangetriebenen Werkzeugs 2.

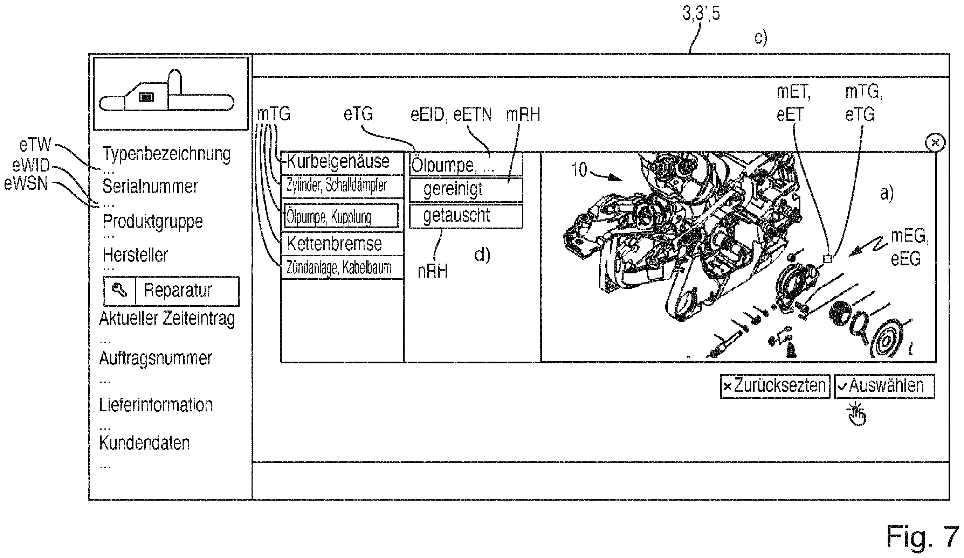

Das System 1 weist eine Ermittlungseinrichtung 3, eine Bestimmungseinrichtung 4 und eine Ausgabeeinrichtung 5 auf. Die Ermittlungseinrichtung 3 ist zum Ermitteln mindestens eines Bauteils eET des Werkzeugs 2, wie in Fig. 2, 3 und 8 gezeigt, und/oder mindestens einer Baugruppe eEG des Werkzeugs 2, wie in Fig. 7 gezeigt, und/oder mindestens eines Bauteil- und/oder Baugruppen-Typs eTG des mindestens einen Bauteils eET und/oder der mindestens einen Baugruppe eEG, wobei das Bauteil eET und/oder die Baugruppe eEG bei der Reparatur des Werkzeugs 2, insbesondere durch einen Reparateur des Werkzeugs 2, behandelt worden sind/ist, ausgebildet. Die Bestimmungseinrichtung 4 ist zum Bestimmen einer Anzahl von möglichen Handlungen mRH, insbesondere durch den Reparateur, ausgeführt bei der Reparatur des Werkzeugs 2 basierend auf dem ermittelten Bauteil eET und/oder der ermittelten Baugruppe eEG und/oder dem ermittelten Bauteil- und/oder Baugruppen-Typ eTG ausgebildet. Die Ausgabeeinrichtung 5 ist zum Ausgeben der bestimmten Anzahl von möglichen Handlungen mRH, insbesondere an den Reparateur, ausgebildet.

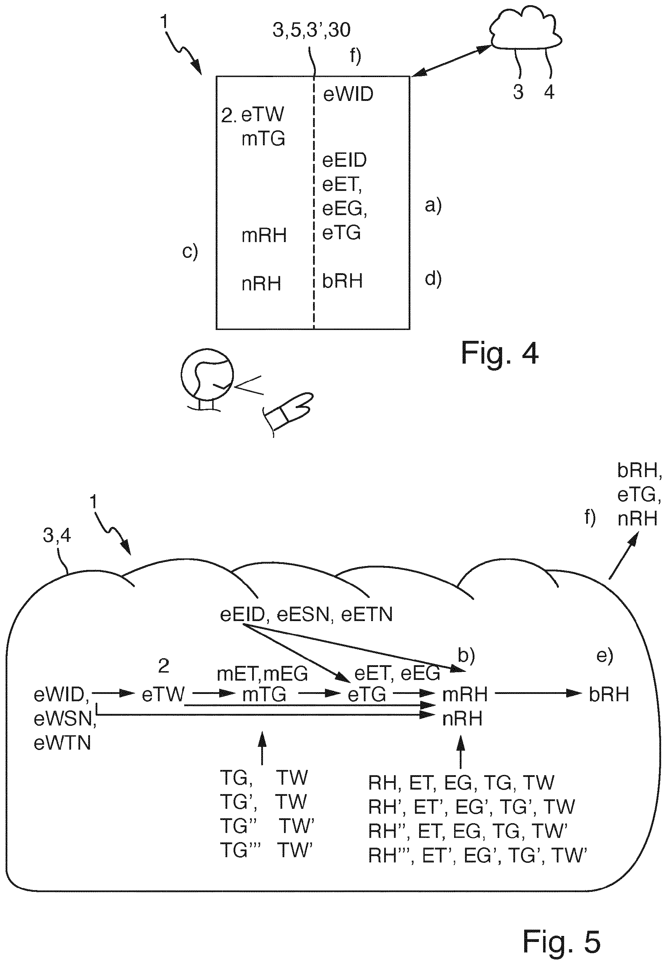

Das Verfahren weist die Schritte auf: a) Ermitteln des mindestens einen Bauteils eET des Werkzeugs 2 und/oder der mindestens einen Baugruppe eEG des Werkzeugs 2 und/oder des mindestens einen Bauteil- und/oder Baugruppen-Typs eTG des mindestens einen Bauteils eET und/oder der mindestens einen Baugruppe eEG, wobei das Bauteil eET und/oder die Baugruppe eEG bei der Reparatur des Werkzeugs 2 behandelt worden sind/ist, insbesondere mittels der Ermittlungseinrichtung 3, wie in Fig. 3, 7 und 8 gezeigt. b) Bestimmen der Anzahl von möglichen Handlungen mRH ausgeführt bei der Reparatur des Werkzeugs 2 basierend auf dem ermittelten Bauteil eET und/oder der ermittelten Baugruppe eEG und/oder dem ermittelten Bauteil- und/oder Baugruppen-Typ eTG, insbesondere mittels der Bestimmungseinrichtung 4, wie in Fig. 5 gezeigt. c) Ausgeben der bestimmten Anzahl von möglichen Handlungen mRH, insbesondere mittels der Ausgabeeinrichtung 5, wie in Fig. 4, 6 und 7 gezeigt.

In dem gezeigten Ausführungsbeispiel weist das System 1 ein mobiles Gerät 30, insbesondere in Form eines Smartphones, auf, wie in Fig. 1, 3 und 4 gezeigt. Das mobile Gerät 30 weist die Ermittlungseinrichtung 3 und die Ausgabeeinrichtung 5, insbesondere in Form einer Anzeige, insbesondere eines Touch-Displays, auf.

Des Weiteren ist die Bestimmungseinrichtung 4 in Form eines Cloud-Servers.

Außerdem sind die Ermittlungseinrichtung 3 und die Bestimmungseinrichtung 4 zum, insbesondere kabellosen, Übertragen des ermittelten Bauteils eET und/oder der ermittelten Baugruppe eEG und/oder des ermittelten Bauteil- und/oder Baugruppen-Typs eTG ausgebildet, insbesondere übertragen.

Weiter sind die Bestimmungseinrichtung 4 und die Ausgabeeinrichtung 5 zum, insbesondere kabellosen, Übertragen der Anzahl von möglichen Handlungen mRH ausgebildet, insbesondere übertragen.

Im Detail weist die Ermittlungseinrichtung 3 eine Eingabeeinrichtung 3', in dem gezeigten Ausführungsbeispiel in Form des Touch-Displays und eines Mikrophons, zu einem berührungsbehafteten und/oder akustischen Eingeben und/oder eine Erfassungseinrichtung 3", in dem gezeigten Ausführungsbeispiel in Form eines Lesegeräts, insbesondere einer Kamera, zum optischen Erfassen auf.

In alternativen Ausführungsbeispielen kann die Ermittlungseinrichtung zusätzlich oder alternativ einen Tisch mit einem Touch-Display aufweisen, insbesondere sein.

Zudem weist das System 1 das Bauteil eET und/oder die Baugruppe eEG und/oder das Werkzeug 2 auf.

In dem gezeigten Ausführungsbeispiel ist das Werkzeug 2 eine Säge 2', wie in Fig. 1 bis 3 gezeigt.

Des Weiteren weist das Werkzeug 2 ein Motorantriebssystem 10 auf, wie in Fig. 3 und 7 gezeigt. Das Bauteil eET und/oder die Baugruppe eEG sind/ist bei der Reparatur des Motorantriebssystems 10 behandelt worden. Die Anzahl von möglichen Handlungen mRH ist ausgeführt bei der Reparatur des Motorantriebssystems 10.

In dem gezeigten Ausführungsbeispiel weist das Motorantriebssystem 10 ein Verbrennungsmotorantriebssystem auf, insbesondere ist das Verbrennungsmotorantriebssystem.

In alternativen Ausführungsbeispielen kann das Motorantriebssystem zusätzlich oder alternativ ein elektrisches Motorantriebssystem, insbesondere ein Akkumulator-Motorantriebssystem, aufweisen, insbesondere sein.

In Fig. 2 und 3 ist das Bauteil eET in Form eines Magnetventils.

In Fig. 7 ist die Baugruppe eEG in Form einer Ölpumpengruppe und das Bauteil eET ist in Form einer Ölpumpe.

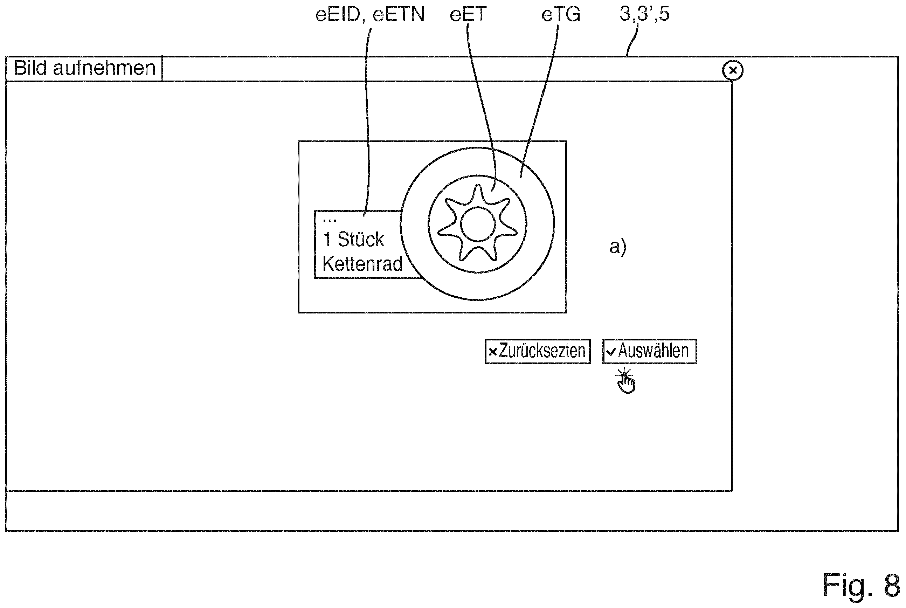

In Fig. 8 ist das Bauteil eET in Form eines Kettenrads.

Außerdem ist die Anzahl von möglichen Handlungen mRH benutzerbestätigbar, insbesondere benutzerauswählbar. Das Verfahren weist die Schritte auf: d) Bestätigen, insbesondere Auswählen, mindestens einer Handlung bRH aus der ausgegebenen Anzahl von möglichen Handlungen mRH, insbesondere durch den Reparateur, insbesondere mittels der Eingabeeinrichtung 3', wie in Fig. 4, 6 und 7 gezeigt. e) Speichern der bestätigten, insbesondere ausgewählten, Handlung bRH, insbesondere mittels des Systems 1, insbesondere eines Speichers des Systems 1, insbesondere in Form des Cloud-Servers.

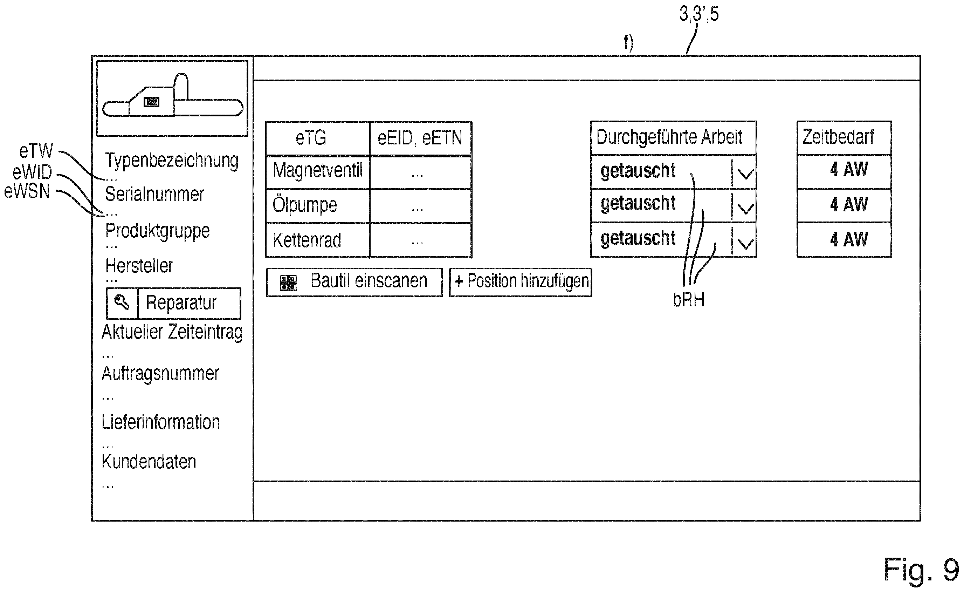

Weiter weist das Verfahren den Schritt auf: f) Ausgeben und/oder Übertragen der gespeicherten Handlung bRH, insbesondere und des ermittelten Bauteils eET und/oder der ermittelten Baugruppe eEG und/oder des ermittelten Bauteil- und/oder Baugruppen-Typs eTG, insbesondere an den Reparateur und/oder einen Benutzer des Werkzeugs 2, insbesondere mittels der Ausgabeeinrichtung 5 und/oder des Cloud-Servers, wie in Fig. 5 und 9 gezeigt.

Zudem weist der Schritt b) auf: Bestimmen einer Anzahl von notwendigen Handlungen nRH, insbesondere durch den Reparateur, ausgeführt bei der Reparatur des Werkzeugs 2 basierend auf dem ermittelten Bauteil eET und/oder der ermittelten Baugruppe eEG und/oder dem ermittelten Bauteil- und/oder Baugruppen-Typ eTG, insbesondere mittels der Bestimmungseinrichtung 4, wie in Fig. 5 gezeigt. Der Schritt c) und/oder der Schritt f) weisen/weist auf: Ausgeben und/oder Übertragen der bestimmten Anzahl von notwendigen Handlungen nRH, insbesondere an den Reparateur und/oder den Benutzer, insbesondere mittels der Ausgabeeinrichtung 5 und/oder des Cloud-Servers, wie in Fig. 5 und 9 gezeigt.

Des Weiteren weist das Verfahren den Schritt auf: Ermitteln eines Werkzeug-Typs eTW des Werkzeugs 2, insbesondere mittels der Ermittlungseinrichtung 3, wie in Fig. 1 gezeigt.

Zusätzlich weist der Schritt b) auf: Bestimmen der Anzahl von möglichen Handlungen mRH und/oder der Anzahl von notwendigen Handlungen nRH basierend auf dem ermittelten Werkzeug-Typ eTW, insbesondere mittels der Bestimmungseinrichtung 4, wie in Fig. 5 gezeigt.

Zusätzlich oder alternativ weist das Verfahren den Schritt auf: Bestimmen einer benutzerauswählbaren Mehrzahl von möglichen Bauteil- und/oder Baugruppen-Typen mTG von möglichen Bauteilen mET und/oder von möglichen Baugruppen mEG, insbesondere durch den Reparateur, behandelt bei der Reparatur des Werkzeugs 2 basierend auf dem ermittelten Werkzeug-Typ eTW, insbesondere mittels der Bestimmungseinrichtung 4, wie in Fig. 5 gezeigt. Das Verfahren weist den Schritt auf: Ausgeben der bestimmten Mehrzahl von möglichen Bauteil- und/oder Baugruppen-Typen mTG, insbesondere in einer Explosionsansicht, insbesondere mittels der Ausgabeeinrichtung 5, wie in Fig. 4 und 7 gezeigt. Der Schritt a) weist auf: Auswählen des Bauteil- und/oder Baugruppen-Typs eTG aus der ausgegebenen Mehrzahl von möglichen Bauteil- und/oder Baugruppen-Typen mTG, insbesondere in der Explosionsansicht, insbesondere durch den Reparateur, insbesondere mittels der Eingabeeinrichtung 3', wie in Fig. 4 und 7 gezeigt.

Außerdem weist der Schritt b) auf: Selektieren der Anzahl von möglichen Handlungen mRH und/oder der Anzahl von notwendigen Handlungen nRH aus einer Menge von verschiedenen Handlungen RH, RH', RH", RH'", wobei den Handlungen RH, RH', RH", RH'" jeweils mindestens ein Bauteil ET, ET' aus einer Menge von verschiedenen Bauteilen ET, ET' und/oder mindestens eine Baugruppe EG, EG' aus einer Menge von verschiedenen Baugruppen EG, EG' und/oder mindestens ein Bauteil- und/oder Baugruppen-Typ TG, TG' des Bauteils ET und/oder einer Baugruppe EG aus einer Menge von verschiedenen Bauteil- und/oder Baugruppen-Typen TG, TG' von Bauteilen ET' und/oder Baugruppen EG, insbesondere und mindestens ein Werkzeug-Typ TW, TW' eines motorangetriebenen Werkzeugs 2 aus einer Menge von verschiedenen Werkzeug-Typen TW, TW' von motorangetriebenen Werkzeugen 2 zugeordnet sind, insbesondere mittels der Bestimmungseinrichtung 4, wie in Fig. 5 gezeigt.

Zusätzlich oder alternativ weist das Bestimmen der Mehrzahl von möglichen Bauteil- und/oder Baugruppen-Typen mTG auf: Selektieren der Mehrzahl von möglichen Bauteil- und/oder Baugruppen-Typen mTG aus einer Menge von verschiedenen Bauteil- und/oder Baugruppen-Typen TG, TG', TG", TG'" von Bauteilen ET und/oder Baugruppen EG, wobei den Bauteil- und/oder Baugruppen-Typen TG, TG', TG", TG'" jeweils mindestens ein Werkzeug-Typ TW, TW' eines motorangetriebenen Werkzeugs 2 aus einer Menge von verschiedenen Werkzeug-Typen TW, TW' von motorangetriebenen Werkzeugen 2 zugeordnet sind, insbesondere mittels der Bestimmungseinrichtung 4, wie in Fig. 5 gezeigt.

Weiter weisen/weist der Schritt a) und/oder der Schritt d) und/oder das Ermitteln des Werkzeug-Typs eTW ein berührungsbehaftetes und/oder akustisches Eingeben, insbesondere mittels einer Spracheingabe, insbesondere Erfassens der Spracheingabe, auf, insbesondere durch den Reparateur, insbesondere mittels der Eingabeeinrichtung 3', in dem gezeigten Ausführungsbeispiel in Form des Touch-Displays und des Mikrophons, wie in Fig. 4 und 7 gezeigt.

Zudem weist der Schritt a) auf: Ermitteln eines Bauteil- und/oder Baugruppen-Identifikators eEID, insbesondere einer Bauteil- und/oder Baugruppen-Seriennummer eESN und/oder einer Bauteil- und/oder Baugruppen-Typnummer eETN, zum Identifizieren des Bauteils eET und/oder der Baugruppe eEG und/oder des Bauteil- und/oder Baugruppen-Typs eTG, insbesondere mittels der Ermittlungseinrichtung 3, wie in Fig. 3 und 8 gezeigt. Der Schritt b) weist auf: Bestimmen der Anzahl von möglichen Handlungen mRH und/oder der Anzahl von notwendigen Handlungen nRH basierend auf dem ermittelten Bauteil- und/oder Baugruppen-Identifikator eEID, insbesondere der ermittelten Bauteil- und/oder Baugruppen-Seriennummer eESN und/oder der ermittelten Bauteil- und/oder Baugruppen-Typnummer eETN, insbesondere mittels der Bestimmungseinrichtung 4.

Zusätzlich oder alternativ weist das Ermitteln des Werkzeug-Typs eTW auf: Ermitteln eines Werkzeug-Identifikators eWID, insbesondere einer Werkzeug-Seriennummer eWSN und/oder einer Werkzeug-Typnummer eWTN, zum Identifizieren des Werkzeugs 2 und/oder des Werkzeug-Typs eTW, insbesondere mittels der Ermittlungseinrichtung 3, wie in Fig. 1 gezeigt.

Zusätzlich weist der Schritt b) auf: Bestimmen der Anzahl von möglichen Handlungen mRH und/oder der Anzahl von notwendigen Handlungen nRH basierend auf dem ermittelten Werkzeug-Identifikator eWID, insbesondere der ermittelten Werkzeug-Seriennummer eWSN und/oder der ermittelten Werkzeug-Typnummer eWTN, insbesondere mittels der Bestimmungseinrichtung 4.

Zusätzlich oder alternativ weist das Bestimmen der Mehrzahl von möglichen Bauteil- und/oder Baugruppen-Typen auf: Bestimmen der Mehrzahl von möglichen Bauteil- und/oder Baugruppen-Typen mTG basierend auf dem ermittelten Werkzeug-Identifikator eWID, insbesondere der ermittelten Werkzeug-Seriennummer eWSN und/oder der ermittelten Werkzeug-Typnummer eWTN, insbesondere mittels der Bestimmungseinrichtung 4.

Des Weiteren weist der Schritt a) ein optisches Erfassen mindestens eines Bauteil- und/oder Baugruppen-Stücks eEST des Bauteils eET und/oder der Baugruppe eEG, insbesondere mittels Bilderkennung, und/oder des Bauteil- und/oder Baugruppen-Identifikators eEID, insbesondere mittels Code-Lesens, auf, insbesondere mittels der Erfassungseinrichtung 3", in dem gezeigten Ausführungsbeispiel in Form des Lesegeräts, insbesondere der Kamera, wie in Fig. 3 und 8 gezeigt.

Zusätzlich oder alternativ weist das Ermitteln des Werkzeug-Typs eTW ein optisches Erfassen mindestens eines Werkzeug-Stücks e2ST des Werkzeugs 2, insbesondere mittels Bilderkennung, und/oder des Werkzeug-Identifikators eWID, insbesondere mittels Code-Lesens, auf, insbesondere mittels der Erfassungseinrichtung 3", in dem gezeigten Ausführungsbeispiel in Form des Lesegeräts, insbesondere der Kamera, wie in Fig. 1 gezeigt.

In alternativen Ausführungsbeispielen können die Ermittlungseinrichtung und das Werkzeug zum, insbesondere kabellosen, Übertragen des Werkzeug-Identifikators ausgebildet sein, insbesondere übertragen.

In dem gezeigten Ausführungsbeispiel ist das Bauteil eET ein Ersatzteil und/oder die Baugruppe eEG ist eine Ersatzgruppe, wobei das Ersatzteil eET und/oder die Ersatzgruppe eEG bei der Reparatur des Werkzeugs 2 bei diesem getauscht worden sind/ist. Somit weist die Anzahl von notwendigen Handlungen nRH eine Anzahl von notwendigen Tauschhandlungen auf, insbesondere des getauschten Bauteils eET und/oder der getauschten Baugruppe eEG. Die Anzahl von möglichen Handlungen mRH weist eine Anzahl von möglichen Reinigungs- und/oder Prüfungshandlungen auf, insbesondere des ersetzten Bauteils und/oder der ersetzten Baugruppe.

Zusätzlich kann die Anzahl von möglichen Handlungen eine Anzahl von möglichen Reinigungs- und/oder Prüfungshandlungen eines und/oder einer anderen, mit dem Bauteil eET und/oder der Baugruppe eEG funktional zusammenhängenden bzw. zusammenwirkenden, insbesondere diesem und/oder dieser vorhergehenden, Bauteil, insbesondere derselben Baugruppe, und/oder Baugruppe aufweisen.

Beispielsweise kann möglicherweise zeitlich vor der Tauschhandlung des Bauteils eET in Form des Magnetventils, das Bauteil einer Baugruppe Vergaser ist, die Baugruppe gereinigt und geprüft worden sein.

Falls mehrere, insbesondere voneinander unabhängige, Bauteile und/oder mehrere, insbesondere voneinander unabhängige, Baugruppen bei der Reparatur des Werkzeugs behandelt worden sind, kann das Verfahren iterativ ausgeführt werden.

Wie die gezeigten und oben erläuterten Ausführungsbeispiele deutlich machen, stellt die Erfindung ein vorteilhaftes Verfahren zum automatisierten Assistieren bei einem Erfassen einer Reparatur eines motorangetriebenen Werkzeugs und ein vorteilhaftes System zum automatisierten Assistieren bei einem Erfassen einer Reparatur eines motorangetriebenen Werkzeugs bereit, das jeweils verbesserte Eigenschaften aufweist.

## Patentansprüche

1. Verfahren zum automatisierten Assistieren bei einem Erfassen einer Reparatur eines motorangetriebenen Werkzeugs (2), wobei das Verfahren die Schritte aufweist:
a) Ermitteln mindestens eines Bauteils (eET) des Werkzeugs (2) und/oder mindestens einer Baugruppe (eEG) des Werkzeugs (2) und/oder mindestens eines Bauteil- und/oder Baugruppen-Typs (eTG) mindestens eines Bauteils (eET) und/oder mindestens einer Baugruppe (eEG), wobei das Bauteil (eET) und/oder die Baugruppe (eEG) bei der Reparatur des Werkzeugs (2) behandelt worden sind/ist,
b) Bestimmen einer Anzahl von möglichen Handlungen (mRH) ausgeführt bei der Reparatur des Werkzeugs (2) basierend auf dem ermittelten Bauteil (eET) und/oder der ermittelten Baugruppe (eEG) und/oder dem ermittelten Bauteil- und/oder Baugruppen-Typ (eTG), und
c) Ausgeben der bestimmten Anzahl von möglichen Handlungen (mRH).

2. Verfahren nach Anspruch 1,
- wobei die Anzahl von möglichen Handlungen (mRH) benutzerbestätigbar, insbesondere benutzerauswählbar, ist, und
- wobei das Verfahren die Schritte aufweist:
d) Bestätigen, insbesondere Auswählen, mindestens einer Handlung (bRH) aus der ausgegebenen Anzahl von möglichen Handlungen (mRH), und
e) Speichern der bestätigten, insbesondere ausgewählten, Handlung (bRH).

3. Verfahren nach Anspruch 2, wobei das Verfahren den Schritt aufweist:
f) Ausgeben und/oder Übertragen der gespeicherten Handlung (bRH), insbesondere und des ermittelten Bauteils (eET) und/oder der ermittelten Baugruppe (eEG) und/oder des ermittelten Bauteil- und/oder Baugruppen-Typs (eTG).

4. Verfahren nach einem der vorhergehenden Ansprüche, insbesondere nach Anspruch 3,
- wobei der Schritt b) aufweist: Bestimmen einer Anzahl von notwendigen Handlungen (nRH) ausgeführt bei der Reparatur des Werkzeugs (2) basierend auf dem ermittelten Bauteil (eET) und/oder der ermittelten Baugruppe (eEG) und/oder dem ermittelten Bauteil- und/oder Baugruppen-Typ (eTG), und
- wobei der Schritt c) und/oder der Schritt f) aufweisen/aufweist: Ausgeben und/oder Übertragen der bestimmten Anzahl von notwendigen Handlungen (nRH).

5. Verfahren nach einem der vorhergehenden Ansprüche, insbesondere nach Anspruch 4,
- wobei das Verfahren den Schritt aufweist: Ermitteln eines Werkzeug-Typs (eTW) des Werkzeugs (2), und
wobei der Schritt b) aufweist: Bestimmen der Anzahl von möglichen Handlungen (mRH) und/oder der Anzahl von notwendigen Handlungen (nRH) basierend auf dem ermittelten Werkzeug-Typ (eTW).

6. Verfahren nach einem der vorhergehenden Ansprüche,
- wobei das Verfahren den Schritt aufweist: Ermitteln eines Werkzeug-Typs (eTW) des Werkzeugs (2),
- wobei das Verfahren den Schritt aufweist: Bestimmen einer benutzerauswählbaren Mehrzahl von möglichen Bauteil- und/oder Baugruppen-Typen (mTG) von möglichen Bauteilen (mET) und/oder von möglichen Baugruppen (mEG) behandelt bei der Reparatur des Werkzeugs (2) basierend auf dem ermittelten Werkzeug-Typ (eTW),
- wobei das Verfahren den Schritt aufweist: Ausgeben der bestimmten Mehrzahl von möglichen Bauteil- und/oder Baugruppen-Typen (mTG), und
- wobei der Schritt a) aufweist: Auswählen des Bauteil- und/oder Baugruppen-Typs (eTG) aus der ausgegebenen Mehrzahl von möglichen Bauteil- und/oder Baugruppen-Typen (mTG).

7. Verfahren nach einem der vorhergehenden Ansprüche, insbesondere nach Anspruch 4 und/oder 5 und/oder 6,
- wobei der Schritt b) aufweist: Selektieren der Anzahl von möglichen Handlungen (mRH) und/oder der Anzahl von notwendigen Handlungen (nRH) aus einer Menge von verschiedenen Handlungen (RH, RH', RH", RH'"), wobei den Handlungen (RH, RH', RH", RH'") jeweils mindestens ein Bauteil (ET, ET') aus einer Menge von verschiedenen Bauteilen (ET, ET') und/oder mindestens eine Baugruppe (EG, EG') aus einer Menge von verschiedenen Baugruppen (EG, EG') und/oder mindestens ein Bauteil- und/oder Baugruppen-Typ (TG, TG') eines Bauteils (ET) und/oder einer Baugruppe (EG) aus einer Menge von verschiedenen Bauteil- und/oder Baugruppen-Typen (TG, TG') von Bauteilen (ET) und/oder Baugruppen (EG), insbesondere und mindestens ein Werkzeug-Typ (TW, TW') eines motorangetriebenen Werkzeugs (2) aus einer Menge von verschiedenen Werkzeug-Typen (TW, TW') von motorangetriebenen Werkzeugen (2), zugeordnet sind, und/oder
- wobei das Bestimmen der Mehrzahl von möglichen Bauteil- und/oder Baugruppen-Typen (mTG) aufweist: Selektieren der Mehrzahl von möglichen Bauteil- und/oder Baugruppen-Typen (mTG) aus einer Menge von verschiedenen Bauteil- und/oder Baugruppen-Typen (TG, TG', TG", TG'") von Bauteilen (ET) und/oder Baugruppen (EG), wobei den Bauteil- und/oder Baugruppen-Typen (TG, TG', TG", TG'") jeweils mindestens ein Werkzeug-Typ (TW, TW') eines motorangetriebenen Werkzeugs (2) aus einer Menge von verschiedenen Werkzeug-Typen (TW, TW') von motorangetriebenen Werkzeugen (2) zugeordnet sind.

8. Verfahren nach einem der vorhergehenden Ansprüche, insbesondere nach Anspruch 2 und/oder 5 und/oder 6,
- wobei der Schritt a) und/oder der Schritt d) und/oder das Ermitteln des Werkzeug-Typs (eTW) ein berührungsbehaftetes und/oder akustisches Eingeben aufweisen/aufweist.

9. Verfahren nach einem der vorhergehenden Ansprüche, insbesondere nach Anspruch 4 und/oder 5 und/oder 6,
- wobei der Schritt a) aufweist: Ermitteln eines Bauteil- und/oder Baugruppen-Identifikators (eEID), insbesondere einer Bauteil- und/oder Baugruppen-Seriennummer (eESN) und/oder einer Bauteil- und/oder Baugruppen-Typnummer (eETN), zum Identifizieren des Bauteils (eET) und/oder der Baugruppe (eEG) und/oder des Bauteil- und/oder Baugruppen-Typs (eTG), und wobei der Schritt b) aufweist: Bestimmen der Anzahl von möglichen Handlungen (mRH) und/oder der Anzahl von notwendigen Handlungen (nRH) basierend auf dem ermittelten Bauteil- und/oder Baugruppen-Identifikator (eEID), insbesondere der ermittelten Bauteil- und/oder Baugruppen-Seriennummer (eESN) und/oder der ermittelten Bauteil- und/oder Baugruppen-Typnummer (eETN), und/oder
- wobei das Ermitteln des Werkzeug-Typs (eTW) aufweist: Ermitteln eines Werkzeug-Identifikators (eWID), insbesondere einer Werkzeug-Seriennummer (eWSN) und/oder einer Werkzeug-Typnummer (eWTN), zum Identifizieren des Werkzeugs (2) und/oder des Werkzeug-Typs (eTW), und wobei der Schritt b) aufweist: Bestimmen der Anzahl von möglichen Handlungen (mRH) und/oder der Anzahl von notwendigen Handlungen (nRH) basierend auf dem ermittelten Werkzeug-Identifikator (eWID), insbesondere der ermittelten Werkzeug-Seriennummer (eWSN) und/oder der ermittelten Werkzeug-Typnummer (eWTN), und/oder wobei das Bestimmen der Mehrzahl von möglichen Bauteil- und/oder Baugruppen-Typen (mTG) aufweist: Bestimmen der Mehrzahl von möglichen Bauteil- und/oder Baugruppen-Typen (mTG) basierend auf dem ermittelten Werkzeug-Identifikator (eWID), insbesondere der ermittelten Werkzeug-Seriennummer (eWSN) und/oder der ermittelten Werkzeug-Typnummer (eWTN).

10. Verfahren nach einem der vorhergehenden Ansprüche, insbesondere nach Anspruch 5 und/oder 6 und/oder 9,
- wobei der Schritt a) ein optisches Erfassen mindestens eines Bauteil- und/oder Baugruppen Stücks (eEST) des Bauteils (eET) und/oder der Baugruppe (eEG) und/oder des Bauteil- und/oder Baugruppen-Identifikators (eEID) aufweist, und/oder
- wobei das Ermitteln des Werkzeug-Typs (eTW) ein optisches Erfassen mindestens eines Werkzeug-Stücks (e2ST) des Werkzeugs (2) und/oder des Werkzeug-Identifikators (eWID) aufweist.

11. Verfahren nach einem der vorhergehenden Ansprüche,
- wobei das Werkzeug (2) ein Motorantriebssystem (10) aufweist, und
- wobei das Bauteil (eET) und/oder die Baugruppe (eEG) bei der Reparatur des Motorantriebssystems (10) behandelt worden sind/ist, und
- wobei die Anzahl von möglichen Handlungen (mRH) ausgeführt bei der Reparatur des Motorantriebssystems (10) ist.

12. Verfahren nach einem der vorhergehenden Ansprüche,
- wobei das Werkzeug (2) eine Säge (2'), ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer, eine Grasschere, ein Häcksler, ein Gesteinsschneider, ein Hochdruckreiniger oder ein Spritz- und/oder Sprühgerät ist.

13. System (1) zum automatisierten Assistieren bei einem Erfassen einer Reparatur eines motorangetriebenen Werkzeugs (2), insbesondere zum Ausführen eines Verfahrens nach einem der vorhergehenden Ansprüche, wobei das System (1) aufweist:
- eine Ermittlungseinrichtung (3), wobei die Ermittlungseinrichtung (3) zum Ermitteln mindestens eines Bauteils (eET) des Werkzeugs (2) und/oder mindestens einer Baugruppe (eEG) des Werkzeugs (2) und/oder mindestens eines Bauteil- und/oder Baugruppen-Typs (eTG) mindestens eines Bauteils (eET) und/oder mindestens einer Baugruppe (eEG), wobei das Bauteil (eET) und/oder die Baugruppe (eEG) bei der Reparatur des Werkzeugs (2) behandelt worden sind/ist, ausgebildet ist,
- eine Bestimmungseinrichtung (4), wobei die Bestimmungseinrichtung (4) zum Bestimmen einer Anzahl von möglichen Handlungen (mRH) ausgeführt bei der Reparatur des Werkzeugs (2) basierend auf dem ermittelten Bauteil (eET) und/oder der ermittelten Baugruppe (eEG) und/oder dem ermittelten Bauteil- und/oder Baugruppen-Typ (eTG) ausgebildet ist, und
- eine Ausgabeeinrichtung (5), wobei die Ausgabeeinrichtung (5) zum Ausgeben der bestimmten Anzahl von möglichen Handlungen (mRH) ausgebildet ist.

14. System (1) nach Anspruch 13,
- wobei die Ermittlungseinrichtung (3) eine Eingabeeinrichtung (3') zu einem berührungsbehafteten und/oder akustischen Eingeben und/oder eine Erfassungseinrichtung (3") zum optischen Erfassen aufweist.

15. System (1) nach Anspruch 13 oder 14, wobei das System (1) aufweist:
- das Bauteil (eET) und/oder die Baugruppe (eEG), und/oder
- das Werkzeug (2).
